# EUROPÄISCHE PATENTSCHRIFT

(11) **EP 3 727 641 B1**
(45) Veröffentlichungstag und Bekanntmachung des Hinweises auf die Patenterteilung: **03.01.2024**
(21) Anmeldenummer: 18803411.0
(22) Anmeldetag: 13.11.2018
(51) Int. Cl.: B01D 35/153, B01D 29/21

(54) **FILTERSYSTEM MIT RÜCKSCHLAGVENTIL UND FILTERELEMENT**
FILTER SYSTEM WITH NON-RETURN VALVE AND FILTER ELEMENT
SYSTÈME DE FILTRATION COMPORTANT UN CLAPET ANTI-RETOUR ET UN ÉLÉMENT FILTRANT

(30) Priorität: 22.12.2017 DE 102017012018
(43) Veröffentlichungstag der Anmeldung: 28.10.2020
(73) Patentinhaber: MANN+HUMMEL GmbH, 71636 Ludwigsburg (DE)
(72) Erfinder: JAINEK, Herbert, 74074 Heilbronn (DE)
(74) Vertreter: Mann + Hummel Intellectual Property
(86) Internationale Anmeldenummer: PCT/EP2018/081045
(87) Internationale Veröffentlichungsnummer: WO 2019/120757

(56) Entgegenhaltungen:
- EP-A1- 0 547 291
- WO-A1-2012/025640
- WO-A1-2012/085193
- WO-A1-2016/146226
- WO-A2-2007/128306
- DE-A1-102009 056 973
- US-A- 2 750 047
- US-A- 4 316 801

## Beschreibung

### Technisches Gebiet

Die Erfindung betrifft ein Filtersystem mit einem Rückschlagventil, insbesondere als Ölfilter einer Brennkraftmaschine, sowie ein Rückschlagventil und ein Filterelement für ein solches Filtersystem.

### Stand der Technik

Die DE102015103662 A1 offenbart einen Filter mit einem Filtergehäuse, mit einem das Filtergehäuse im Betrieb verschließenden, vom Filtergehäuse abnehmbaren Gehäusedeckel, mit einem Einlass für zu filternde Flüssigkeit und mit einem Auslass für gefilterte Flüssigkeit. Weiter offenbart die DE102015103662 A1 einen eine Rohseite und eine Reinseite des Filters voneinander trennenden, austauschbaren Filtereinsatz mit einem Filterumgehungsventil, das aus einem Ventilsitz und aus einem relativ dazu beweglich geführten, mit einer in Ventilschließrichtung wirkenden Kraft vorbelasteten Ventilkörper besteht. Der Ventilsitz ist deckelfest im oder am Gehäusedeckel angeordnet, wobei der Ventilkörper deckelfest im oder am Gehäusedeckel geführt ist und wobei eine den Ventilkörper in Ventilschließrichtung vorbelastende Feder deckelfest im oder am Gehäusedeckel geführt ist. Der Filtereinsatz weist eine Federstütze auf. Im in den Filter eingebauten Zustand des Filtereinsatzes und bei am Filtergehäuse angebrachtem Gehäusedeckel ist die Feder an ihrem vom Ventilkörper abgewandten Ende mittels der Federstütze abgestützt und vorgespannt.

Die US 2 750 047 A zeigt einen Filter mit einem perforierten zentralen Element, einer Vielzahl von ringförmigen Filterelementen, wobei sich das zentrale Element durch die zentrale Öffnung der Filter- und Zwischenelemente erstreckt.

Die WO 2007/128306 A2 offenbart einen Flüssigkeitsfilter mit einem Rücklaufsperrventil, das bei einem Stillstand der Flüssigkeitspumpe verhindert, dass die Flüssigkeit aus dem Filtergehäuse herausläuft.

Aus der WO 2016/146226 A1 ist eine Filtervorrichtung zu entnehmen, mit einem Filterkopf und einem den Filtertopf aufweisenden Filtergehäuse, das ein Filterelement aufnimmt, das eine Unfiltratseite von einer Filtratseite separiert und mit einer Differenzdruck-Messeinrichtung.

Die WO 2012/085193 A1 zeigt einen Flüssigkeitsfilter mit einem Gehäuse mit einem abnehmbaren Deckel, mit einem in eine Rohseite des Flüssigkeitsfilters einmündenden Einlass für zu filternde Flüssigkeit und einem von einer Reinseite des Flüssigkeitsfilters ausgehenden Auslass für gefilterte Flüssigkeit, mit einem die Rohseite und die Reinseite voneinander trennenden, auswechselbaren Filtereinsatz aus einem stirnseitig von zwei Endscheiben eingefassten hohlzylindrischen Filterstoffkörper und mit einem Filterumgehungsventil.

Aus der WO 2012/025640 A1 ist ein Filter zur Filtrierung von Fluiden bekannt mit einem Filtertopf, in dem ein Filterelement angeordnet ist, und einem Filterkopf, der wenigstens einen Einlass für das zu filtrierende Fluid und/oder wenigstens einen Auslass für das filtrierte Fluid aufweist, wobei der Filterkopf und Filtertopf mittels einer lösbaren bajonettartigen Dreh-/Steckverbindung miteinander verbunden sind.

Die DE 10 2009 056973 A1 betrifft einen Flüssigkeitsfilter mit einem Filtergehäuse, mit einem darin auswechselbar angeordneten Filtereinsatz und mit einem das Filtergehäuse im Betrieb verschließenden, abnehmbaren Deckel, wobei der Flüssigkeitsfilter ein Filterumgehungsventil mit einem zentral im Deckel axial beweglich geführten, in Schließrichtung mit einer Kraft vorbelasteten Ventilkörper aufweist.

### Offenbarung der Erfindung

Eine Aufgabe der Erfindung ist es, ein Filtersystem mit einem Rückschlagventil zu schaffen, insbesondere einen Ölfilter einer Brennkraftmaschine, wobei das Rückschlagventil ein mögliches Absinken des Ölniveaus in einem Ölkreislauf bei niedrigem Öldruck oder bei Außerbetrieb der Brennkraftmaschine vermindert und das Rückschlagventil kostengünstig zu montieren ist.

Weitere Aufgaben der Erfindung sind, die Verwendung eines Rückschkagventils für ein solches Filtersystem sowie ein Filterelement für ein solches Filtersystem mit Rückschlagventil anzugeben.

Die vorgenannte Aufgabe wird nach einem Aspekt der Erfindung gelöst von einem Filtersystem zum Filtern eines Fluids, umfassend ein Filtergehäuse mit einem Gehäuseoberteil und einem Gehäuseunterteil, die sich entlang einer Gehäuseachse erstrecken, einen am Gehäuseoberteil angeordneten Auslassstutzen zur Ableitung des gefilterten Fluids, ein Rückschlagventil, welches im Inneren des Auslassstutzens angeordnet ist, ein Filterelement, das eine Rohfluidseite von einer Reinfluidseite trennt, wobei das Filterelement einen Ventilsitz für das Rückschlagventil aufweist, und wobei das Rückschlagventil in einer geschlossenen Position einen Fluidpfad durch den Auslassstutzen verschließt und in einer geöffneten Position den Fluidpfad durch den Auslassstutzen freigibt.

Eine weitere Aufgabe wird nach einem Aspekt der Erfindung gelöst durch die Verwendung eines Rückschlagventils einem Filtersystem mit einem Filterelement, wobei das Rückschlagventil, das in dem Filtersystem im Inneren eines Auslassstutzens des Filtersystems angeordnet ist, bei bestimmungsgemäßer Montage, eines passenden Filter-elementes mit einem durch ein Federelement gegen einen Ventilsitz abgestützten Verschlusselement wirkt, wobei der Ventilsitz an oder in dem Filterelement ausgebildet ist. Nur bei der Verwendung eines passenden, insbesondere in der Länge passenden, Filterelementes ergibt sich ein Zusammenwirken des Filterelementes mit dem daran ausgebildeten Ventilsitz mit dem Rückschlagventil, so dass ein Absinken des Fluiddruckes, beispielsweise beim Abstellen der Brennkraftmaschine verhindert wird. Beim Entfernen des Elementes ist das Rückschlagventil undicht, so dass beim Service des Filterelementes der Fluidabfluss auch aus dem Reinbereich möglich ist.

Eine weitere Aufgabe wird erfindungsgemäß gelöst von einem Filterelement zur Verwendung in einem Filtersystem, mit einer Längsachse, umfassend einen um die Längsachse angeordneten Filterbalg, wobei das Filterelement einen Stutzen mit einer Öffnung zum Abführen des gefilterten Fluids aus dem Inneren des Filterbalgs aufweist, wobei der Stutzen als Ventilsitz eines Rückschlagventils ausgebildet ist.

Günstige Ausgestaltungen und Vorteile der Erfindung ergeben sich aus den weiteren Ansprüchen, der Beschreibung und der Zeichnung.

Es wird ein Filtersystem zum Filtern eines Fluids, insbesondere als Ölfilter einer Brennkraftmaschine, vorgeschlagen, umfassend ein Filtergehäuse mit einem Gehäuseoberteil und einem Gehäuseunterteil, die sich entlang einer Gehäuseachse erstrecken, einen am Gehäuseoberteil angeordneten Auslassstutzen zur Ableitung des gefilterten Fluids, ein Rückschlagventil, welches im Inneren des Auslassstutzens angeordnet ist, und ein Filterelement, das eine Rohfluidseite von einer Reinfluidseite trennt. Das Filterelement weist einen Ventilsitz für das Rückschlagventil auf. Dabei verschließt das Rückschlagventil in einer geschlossenen Position einen Fluidpfad durch den Auslassstutzen und gibt in einer geöffneten Position den Fluidpfad durch den Auslassstutzen frei.

Auf der Reinseite des erfindungsgemäßen Filtersystems ist ein Rückschlagventil angeordnet, welches in einer geschlossenen Position den Fluidpfad durch den Auslassstutzen verschließt und in einer geöffneten Position den Fluidpfad durch den Auslassstutzen freigibt. Dies ist insbesondere bei einem hängenden Filtersystem von Vorteil. Bei einem hängenden Filtersystem ist beispielsweise das Gehäuseoberteil fest montiert, und das Filterelement kann mit dem Gehäuseunterteil vom Gehäuseoberteil getrennt werden. Wird ein solches Filtersystem beispielsweise als Ölfiltersystem bei einer Verbrennungskraftmaschine eingesetzt, sackt das Ölniveau bei Motorstillstand nicht ab, da das Rückschlagventil den Rücklauf des Öls in das Filterelement verhindert. Weiter findet der Öldruckaufbau bei Neustart schneller statt. Vorteilhafterweise ist das Ventil beim Servicefall, bei dem das Filterelement entfernt, bzw. ausgetauscht werden soll, nicht völlig dicht, sodass die Ölsäule trotz Rückschlagventil durch das Ventil ablaufen kann. Hierdurch kann beim Wechsel des Filterelements mehr Altöl entfernt werden und durch neues Öl ersetzt werden.

Wenn das Filterelement in das Filtergehäuse eingesetzt ist, wird das Verschlusselement des Rückschlagventils dichtend gegen die Öffnung in der Endscheibe, beispielsweise den Stutzen des Mittelrohrs im Filterelement, über ein Federelement angedrückt. Dadurch ist das Rückschlagventil in seiner geschlossenen Position und der Fluidpfad durch den Auslassstutzen des Filtergehäuses verschlossen. Bei zunehmend aufbauendem Öldruck kann das Verschlusselement des Rückschlagventils durch den Fluiddruck von seinem Ventilsitz abgehoben werden und dadurch die Öffnung im Auslassstutzen freigeben. Der Auslassstutzen kann vorteilhaft konzentrisch zu der Gehäuseachse angeordnet sein, um eine einfache Montage des Filterelements ohne genaue rotatorische Positionierung zu ermöglichen.

Wird das Filterelement entfernt, liegt das Verschlusselement, z. B. eine Scheibe, unverlierbar auf dem Ventilhalter, der beispielsweise als Rückhaltering ausgebildet ist, auf. Mittels Abstandssegmenten und dazwischen angeordneten Durchbrüchen, wie beispielsweise Leckageöffnungen, liegt das Verschlusselement nicht völlig dichtend am Ventilhalter an. Dabei ist der Ventilsitz, auf dem das Verschlusselement bei eingesetztem Filterelement aufliegt, im Filterelement angeordnet, beispielsweise an dem Stutzen des Mittelrohrs. Auf diese Weise kann die eigentliche Funktionalität eines Rückschlagventils realisiert werden. Im eingebauten Zustand ragt der Stutzen des Filterelements in den Ventilhalter und über diesen hinaus. Dadurch kann das Verschlusselement ohne oder bei geringem Fluiddruck dicht am Stutzen anliegen. Eine Dichtung zwischen Stutzen und Auslassstutzen verhindert eine Leckage des Fluids bei eingebautem Filterelement.

Das Rückschlagventil ermöglicht so vorteilhafterweise eine Rückhaltefunktion des Ölkreislaufs zur schnellen Schmierung der Verbrennungskraftmaschine bei Neustart. Ein optimierter Ölablauf mit günstig, nämlich möglichst großem ablaufendem Ölvolumen, trägt weiter zu den Vorteilen des erfindungsgemäßem Filtersystems mit Rückschlagventil bei.

Erfindungsgemäß umfasst das Filterelement einen um seine Längsachse angeordneten Filterbalg. Das Filterelement weist weiter einen Stutzen mit einer Öffnung in einer Längsachse des Filterelements zum Abführen des gefilterten Fluids aus dem Inneren des Filterbalgs auf. Der Stutzen ist als Ventilsitz ausgebildet und ist zusätzlich auch als Betätigungselement vorgesehen. Beim Einsetzen des Filterelements in das Filtergehäuseoberteil, wobei das Filterelement beispielsweise mit dem Filtergehäuseunterteil lösbar verbunden, beispielsweise verrastet, sein kann, kann dabei der Stutzen das Verschlusselement des Rückschlagventils von seiner Ausgangsposition abheben. Da der Stutzen als Ventilsitz ausgebildet ist und das Verschlusselement von dem Federelement gegen den Ventilsitz gedrückt wird, ist das Rückschlagventil so in seiner geschlossenen Position. Zunehmender Fluiddruck wirkt dem Federelement entgegen, sodass das Verschlusselement von seinem Ventilsitz abgehoben werden kann und die Öffnung des Auslassstutzens zumindest teilweise freigibt.

Der Stutzen des Filterelements kann eine zentrale Öffnung als Ventilsitz aufweisen, welche aus fertigungstechnischen Gründen und zur besseren Abdichtung einen kreisförmigen Querschnitt aufweisen kann.

Gemäß einer vorteilhaften Ausgestaltung kann das Rückschlagventil ein Verschlusselement und ein Federelement aufweisen, wobei das Federelement am Gehäuseoberteil abgestützt ist. Insbesondere kann dabei das Federelement zwischen Verschlusselement und Gehäuseoberteil eingespannt sein. Das Federelement drückt so das Verschlusselement gegen den dichtenden Ventilsitz, wodurch das Rückschlagventil in seiner geschlossenen Position ist und der Fluidpfad durch den Auslassstutzen gesperrt ist. Das Federelement kann dabei zweckmäßigerweise mit einem Ende am Gehäuseoberteil anliegen und sich abstützen. Wird die Federkraft überdrückt, kann das Verschlusselement von seinem Ventilsitz abheben und dadurch den Fluidpfad durch den Auslassstutzen freigeben.

Gemäß einer vorteilhaften Ausgestaltung kann der Filterbalg wenigstens eine erste Endscheibe an einer ersten Stirnseite aufweisen, welche Endscheibe eine Öffnung zur Aufnahme eines Mittelrohrs im Inneren des Filterbalgs aufweist, wobei der Stutzen mit dem Ventilsitz an einem der Endscheibe zugewandten Ende des Mittelrohrs ausgebildet ist. Das Fluid strömt beim Filtern von radial außen durch den Filterbalg ins Innere des Filterbalgs. Das Mittelrohr im Inneren des Filterbalgs dient dabei der radialen Abstützung des Filterbalgs gegen den hydraulischen Druck des Fluids beim Filtern. Das Mittelrohr, das beispielsweise als Kunststoffrohr mit Durchbrüchen und Verstrebungen aufgebaut sein kann, kann dabei in Richtung des Auslassstutzens als Stutzen ausgebildet sein. Dieser Stutzen dient als Ventilsitz für das Rückschlagventil auf welchem das Verschlusselement in geschlossenem Zustand des Rückschlagventils dichtend aufliegt. Der Stutzen kann beim Einsetzen des Filterelements in das Filtergehäuse das Verschlusselement von seiner Ausgangsposition, wo das Verschlusselement auf einem Ventilhalter aufliegt, abheben.

Gemäß einer vorteilhaften Ausgestaltung kann das Rückschlagventil im ausgebauten Zustand des Filterelements leckagebehaftet ausgebildet sein. Zweckmäßigerweise kann das Rückschlagventil in ausgebautem Zustand des Filterelements, in welchem es sich in seiner Ausgangsposition befindet, Leckage aufweisen, damit beim Wechsel des Filterelements möglichst viel Fluid aus dem Fluidkreislauf abfließen kann.

Erfindungsgemäß ist im Inneren des Auslassstutzens ein Ventilhalter angeordnet, auf dem das Verschlusselement im ausgebauten Zustand des Filterelements aufliegt. Dabei ragt im eingebauten Zustand des Filterelements der Stutzen des Filterelements durch den Ventilhalter hindurch. Der Ventilhalter dient der Ablage des mit dem Federelement vorgespannten Verschlusselements des Rückschlagventils. Dadurch kann das Rückschlagventil in seiner Ausgangsposition gehalten werden, bis das Filterelement in das Filtergehäuse eingesetzt wird und das Verschlusselement mit dem Stutzen des Mittelrohrs, der durch den Ventilhalter hindurchragt, von dem Ventilhalter abgehoben und gegen den auf dem Stutzen ausgebildeten Ventilsitz gedrückt wird. Der Ventilhalter dient auch als Befestigung des Ventils in dem Auslassstutzen, indem er beispielsweise sich gegen die Wand des Auslassstutzens abstützt.

Gemäß einer vorteilhaften Ausgestaltung können zwischen Verschlusselement und Ventilhalter Leckageöffnungen ausgebildet sein. Insbesondere kann dabei der Ventilhalter radial nach innen ragende Stege aufweisen, auf welchen das Verschlusselement im ausgebauten Zustand des Filterelements aufliegt. Die Leckageöffnungen können dabei beispielsweise zwischen den Stegen ausgebildet sein. Durch die Leckageöffnungen kann das Fluid beim Wechsel des Filterelements, wenn das Verschlusselement wieder auf dem Ventilhalter aufliegt, abfließen, sodass der Fluidkreislauf darüber entleert werden kann. Hierzu ist zweckmäßigerweise der Durchmesser des Stutzens so gewählt, dass die Leckageöffnungen sich außerhalb des Durchmessers des Stutzens befinden. Im eingebauten Zustand bei niedrigem Fluiddruck ist das Rückschlagventil geschlossen und nur bei ausreichendem Fluiddruck geöffnet. Bei ausgebautem Filterelement ist das Rückschlagventil wegen der Leckageöffnungen gezielt leckagebehaftet ausgebildet.

Gemäß einer vorteilhaften Ausgestaltung kann der Ventilhalter als Blechbiegeteil ausgebildet sein, welches in dem Auslassstutzen radial verspannbar ist. Ein Blechbiegeteil ist kostengünstig mit geeigneten Toleranzmaßen herzustellen. Auch lassen sich so günstigerweise Krallen auf der radialen Außenseite des Ventilhalters ausbilden, mit denen der Ventilhalter beim Einschieben in den Auslassstutzen in der Wand des Auslassstutzens verkrallt werden kann und so durch radiale Verspannung sicher fixiert werden kann.

Gemäß einer vorteilhaften Ausgestaltung kann das Rückschlagventil ein Ventilgehäuse aufweisen, welches im Inneren des Auslassstutzens und/oder an dem Ventilhalter angeordnet ist und an welchem das Federelement abgestützt ist. Das Federelement kann so geeignet an einem Ende des Ventilgehäuses abgestützt werden, wodurch die Kraft über das Ventilgehäuse auf den Auslassstutzen und damit das Filtergehäuseoberteil übertragen werden kann. Alternativ kann das Ventilgehäuse auch mit dem Ventilhalter verbunden werden. Wenn dieser Ventilhalter am Filtergehäuse fixiert ist, kann dadurch die Federkraft auf das Filtergehäuse übertragen werden, sodass das Federelement am Filtergehäuse abgestützt ist.

Gemäß einer vorteilhaften Ausgestaltung können das Ventilgehäuse und der Ventilhalter miteinander verbindbar, insbesondere einteilig ausgebildet sein. Durch Ausbildung einer verbundenen Einheit aus Ventilgehäuse und Ventilhalter kann die Montage des Rückschlagventils als Ganzes in dem Auslassstutzen vereinfacht werden. Auch kann durch eine einteilige Ausbildung von Ventilgehäuse und Ventilhalter eine besonders kostengünstige Einheit geschaffen werden. Vorteilhaft kann das Rückschlagventil so als vormontierbare Einheit ausgebildet sein, was die Montagezeiten und Kosten des Filtersystems günstig gestalten lässt.

Das Filterelement ist mit seinem Mittelrohr wenigstens teilweise in den Auslassstutzen einschiebbar ausgebildet wobei der Auslassstutzen gegen die Öffnung der Endscheibe und/oder gegen das Mittelrohr abdichtbar ausgebildet ist, insbesondere wobei der Stutzen des Mittelrohrs an seiner Außenseite gegen den Auslassstutzen abgedichtet ist. Durch ein Abdichten des Auslassstutzens gegen die Öffnung der Endscheibe und/oder gegen das Mittelrohr kann erreicht werden, dass das gefilterte Fluid vollständig durch den Auslassstutzen aus dem Filterelement ausfließen kann. Auf diese Weise kann auch die vorteilhafte Funktion des Rückschlagventils günstigerweise ausgenutzt werden, da keine Nebenfluidpfade zwischen Filterelement und Auslassstutzen möglich sind.

Das Mittelrohr weist am der zentralen Öffnung gegenüberliegenden Ende ein Abschlusselement auf welches mit dem Gehäuseunterteil verbindbar ausgebildet ist. Das Mittelrohr kann an dem anderen Ende vorteilhaft dicht abgeschlossen sein, damit das gefilterte Fluid vollständig durch den Auslassstutzen abfließt. Das Abschlusselement kann dabei zweckmäßigerweise zum Verbinden mit dem Gehäuseunterteil, beispielsweise durch Verrasten, benutzt werden. Auf diese Weise lässt sich auch eine günstige lösbare Verbindung zwischen Filterelement und Gehäuseunterteil realisieren.

Nach einem weiteren Aspekt betrifft die Erfindung die Verwendung eines Rückschlagventils in einem Filtersystem mit einem Filterelement. Das Rückschlagventil ist bei bestimmungsgemäßer Montage in dem Filtersystem im Inneren eines Auslassstutzens des Filtersystems angeordnet, mit einem durch ein Federelement gegen einen Ventilsitz abgestützten Verschlusselement. Dabei ist der Ventilsitz an oder in dem Filterelement ausgebildet.

Das Rückschlagventil ermöglicht so vorteilhafterweise eine Rückhaltefunktion des Ölkreislaufs zur schnellen Schmierung der Verbrennungskraftmaschine bei Neustart. Ein optimierter Ölablauf mit günstig, nämlich möglichst großem ablaufendem Ölvolumen, trägt weiter zu den Vorteilen des erfindungsgemäßem Filtersystems mit Rückschlagventil bei.

Nach einem weiteren Aspekt betrifft die Erfindung ein Filterelement zur Verwendung in einem Filtersystem, mit einer Längsachse, umfassend einen um die Längsachse angeordneten Filterbalg. Dabei weist das Filterelement einen Stutzen mit einer Öffnung zum Abführen des gefilterten Fluids aus dem Inneren des Filterbalgs auf, wobei der Stutzen als Ventilsitz eines Rückschlagventils ausgebildet ist.

Wenn das Filterelement in das Filtergehäuse eingesetzt ist, wird das Verschlusselement des Rückschlagventils dichtend gegen die Öffnung in der Endscheibe, beispielsweise einen Stutzen des Mittelrohrs im Filterelement, über das Federelement angedrückt. Dadurch ist das Rückschlagventil in seiner geschlossenen Position und der Fluidpfad durch den Auslassstutzen des Filtergehäuses verschlossen. Bei zunehmend aufbauendem Öldruck kann das Verschlusselement des Rückschlagventils durch den Fluiddruck von seinem Ventilsitz abgehoben werden und dadurch die Öffnung im Auslassstutzen freigeben.

Gemäß einer vorteilhaften Ausgestaltung kann der Filterbalg wenigstens eine erste Endscheibe an einer ersten Stirnseite aufweisen, welche Endscheibe eine Öffnung zur Aufnahme eines Mittelrohrs im Inneren des Filterelements aufweist. Dabei ist der Stutzen mit dem Ventilsitz an einem der Endscheibe zugewandten Ende des Mittelrohrs ausgebildet.

Das Fluid strömt beim Filtern von radial außen durch den Filterbalg ins Innere des Filterbalgs. Das Mittelrohr im Inneren des Filterbalgs dient dabei der Versteifung des Filterbalgs gegen den hydraulischen Druck des Fluids beim Filtern. Das Mittelrohr, das beispielsweise als Kunststoffrohr mit Durchbrüchen und Verstrebungen aufgebaut sein kann, kann dabei in Richtung des Auslassstutzens als Stutzen ausgebildet sein. Dieser Stutzen kann vorteilhaft als Ventilsitz für das Rückschlagventil dienen, auf welchem das Verschlusselement in geschlossenem Zustand des Rückschlagventils dichtend aufliegt. Der Stutzen kann beim Einsetzen des Filterelements in das Filtergehäuse das Verschlusselement von seiner Ausgangsposition, wo das Verschlusselement auf einem Ventilhalter aufliegt, abheben.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen beispielhaft:
- Fig. 1: einen Längsschnitt durch ein Filtersystem nach einem Ausführungsbeispiel der Erfindung mit einem Rückschlagventil in einer geschlossenen Position;
- Fig. 2: einen Längsschnitt durch das Filtergehäuseoberteil des Filtersystems in Figur 1 mit dem Rückschlagventil in einer Ausgangsposition;
- Fig. 3: einen Längsschnitt durch das Filterelement des Filtersystems in Figur 1;
- Fig. 4: einen vergrößerten Ausschnitt des Filtersystems nach Fig. 1 mit Fokus auf das Rückschlagventil in einer geschlossenen Position;
- Fig. 5: einen vergrößerten Ausschnitt des Filtersystems nach Fig. 1 mit Fokus auf das Rückschlagventil in einer geöffneten Position;
- Fig. 6: eine Draufsicht auf den Ventilhalter;
- Fig. 7: einen Längsschnitt durch das Rückschlagventil in einer Ausgangsposition;
- Fig. 8: einen Längsschnitt durch ein Filtersystem nach einem weiteren Ausführungsbeispiel der Erfindung mit einem Rückschlagventil in einer geschlossenen Position;
- Fig. 9: einen vergrößerten Ausschnitt des Filtersystems nach Fig. 8 mit Fokus auf das Rückschlagventil in einer geschlossenen Position; und
- Fig. 10: einen vergrößerten Ausschnitt des Filtersystems nach Fig. 8 mit Fokus auf das Rückschlagventil in einer geöffneten Position.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

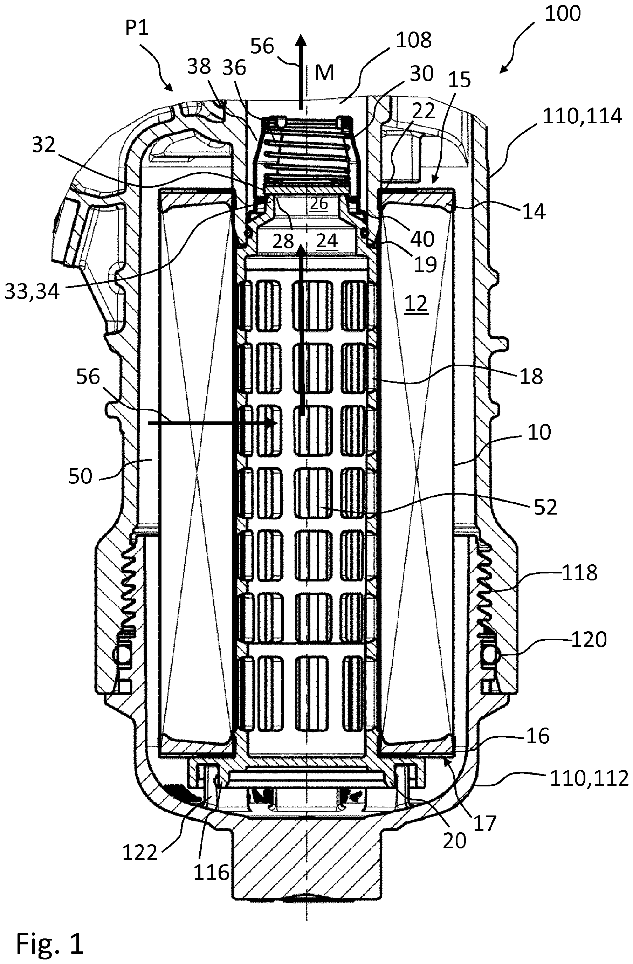

Figur 1 zeigt einen Längsschnitt durch ein Filtersystem 100 zum Filtern eines Fluids, insbesondere als Ölfilter einer Brennkraftmaschine, nach einem Ausführungsbeispiel der Erfindung mit einem Rückschlagventil 30 in einer geschlossenen Position P1. Das Filtersystem 100 umfasst ein Filtergehäuse 110 mit einem Gehäuseoberteil 114 und einem Gehäuseunterteil 112, die sich entlang einer Gehäuseachse M erstrecken. Am Gehäuseoberteil 114 ist ein Auslassstutzen 108 zur Ableitung des gefilterten Fluids angeordnet, der beispielsweise mit einem Ölkreislauf einer Brennkraftmaschine verbunden sein kann.

Im Inneren des Auslassstutzens 108 ist ein Rückschlagventil 30 angeordnet. Das Rückschlagventil 30 weist ein Verschlusselement 32 und ein Federelement 36 auf. Das Federelement 30 ist am Gehäuseoberteil 114 abgestützt, insbesondere ist das Federelement 30 zwischen Verschlusselement 32 und Gehäuseteil 114 eingespannt. Das Rückschlagventil 30 verschließt in einer geschlossenen Position P1 einen Fluidpfad 56 durch den Auslassstutzen 108 und gibt in einer geöffneten Position P2 den Fluidpfad 56 durch den Auslassstutzen 108 frei.

Ein Filterelement 10, das im Inneren des Filtergehäuses 110 angeordnet ist, trennt eine Rohfluidseite 50 von einer Reinfluidseite 52. Das Filterelement 10 umfasst einen um seine Längsachse L angeordneten Filterbalg 12. Der Filterbalg 12 wird von dem Fluid radial von außen nach innen durchströmt. Der Fluidpfad 56 ist durch Pfeile angedeutet. Der Filterbalg 12 weist eine erste Endscheibe 14 an einer ersten Stirnseite 15 auf, welche eine Öffnung 22 zur Aufnahme eines Mittelrohrs 18 im Inneren 24 des Filterbalgs 12 aufweist. An dem der Endscheibe 14 zugewandten Ende des Mittelrohrs 18 ist der Stutzen 28 ausgebildet. Der Stutzen 28 mit einer Öffnung 26 ist in der Längsachse L des Filterelements 10 angeordnet und dient zum Abführen des gefilterten Fluids aus dem Inneren 24 des Filterbalgs 12. Der Stutzen 28 ist als Ventilsitz 34 ausgebildet und ist weiter als Betätigungselement 33 zum Anheben des Rückschlagventils 30 vorgesehen. Dabei ist das Rückschlagventil 30 so lange geschlossen, bis ein ausreichender Fluiddruck aufgebaut ist, der das Verschlusselement 32 vom Ventilsitz hebt. Beim Einsetzen des Filterelements 10 in das Filtergehäuseoberteil 114 hebt der Stutzen 28, der durch den Ventilhalter 40 hindurchragt, das Verschlusselement 32 des Rückschlagventils 30 von seiner Ausgangsposition auf dem Ventilhalter 40 ab. Dadurch ist das Rückschlagventil 30 zunächst in seiner geschlossenen Position P1.

Das Filterelement 10 ist mit seinem Mittelrohr 18 wenigstens teilweise in den Auslassstutzen 108 einschiebbar ausgebildet. Der Auslassstutzen 108 ist gegen die Öffnung 22 der Endscheibe 14 und gegen das Mittelrohr 18 abdichtbar ausgebildet. Insbesondere ist der Stutzen 28 an seiner Außenseite durch die umlaufende Dichtung 19, beispielsweise eine O-Ring-Dichtung, gegen den Auslassstutzen 108 abgedichtet.

Gehäuseoberteil 114 und Gehäuseunterteil 112 des Filtergehäuses 110 sind über ein Schraubgewinde 118 miteinander verbunden. Beide Gehäuseteile 112, 114 sind über eine umlaufende Dichtung 120, beispielsweise eine O-Ring-Dichtung, gegen die Umgebung abgedichtet. Das Mittelrohr 18 des Filterelements 10 weist am der zentralen Öffnung 26 gegenüber liegenden Ende ein Abschlusselement 20 auf, welches mit dem Gehäuseunterteil 112 verbindbar ausgebildet ist. Das Filterelement 10 ist durch das Abschlusselement 20 am unteren Ende dicht verschlossen. Das Filterelement 10 kann mit dem Abschlusselement 20 auf ein im Gehäuseunterteil 112 angeordnetes Zentrierteil 122 aufgesetzt werden und beispielsweise über eine Verrastungsanordnung 116 mit dem Zentrierteil 122 verbunden werden. Damit kann das Filterelement 10 mit dem Gehäuseunterteil 112 in das Gehäuseoberteil 114 eingesetzt werden und durch Verschrauben des Gehäuseunterteils 112 mit dem Gehäuseoberteil 114 das Filtergehäuse 110 dicht verschlossen werden.

Durch Einführen des Filterelements 10 in das Gehäuseoberteil 114 kommt das Verschlusselement 32 des Rückschlagventils 30 auf dem Stutzen 28 des Mittelrohrs 18 und damit dem Ventilsitz 34 zum Aufliegen, wodurch der Fluidpfad 56 durch den Auslassstutzen 108 verschlossen ist und nur durch Aufbau eines entsprechenden hydraulischen Drucks durch das Fluid geöffnet werden kann.

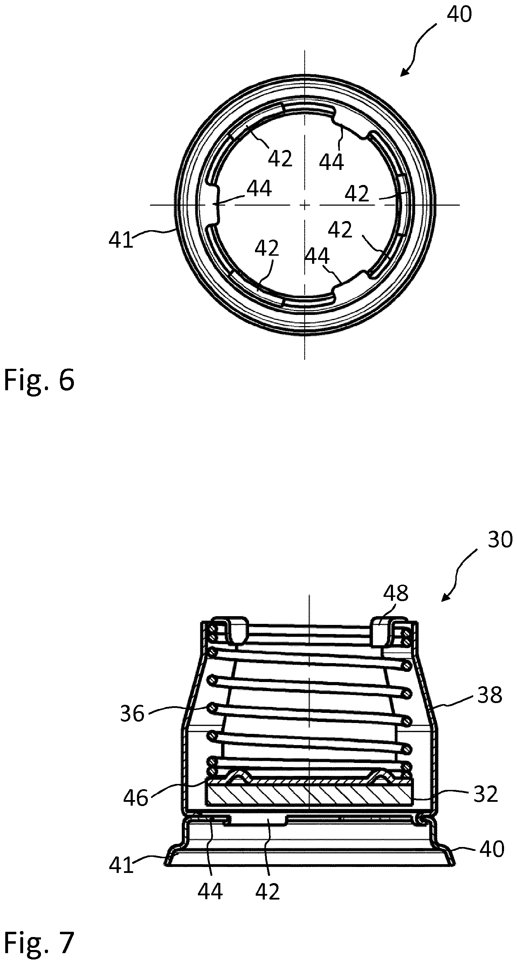

Durch Lösen der Verschraubung 118 kann das Filterelement 10 mit dem Gehäuseunterteil 112 wieder aus dem Filtergehäuse 110 herausgezogen werden. Damit wird der Stutzen 28 von dem Verschlusselement 32 abgehoben. Das Verschlusselement 32 kommt dadurch wieder auf dem Ventilhalter 40 zum Aufliegen. Fluid kann durch Leckageöffnungen 42 im Ventilhalter 40, wie in Figur 6 dargestellt, neben dem Verschlusselement 32 vorbeiströmen und so der Fluidkreislauf von dem Auslassstutzen 108 her entleert werden.

Das Filterelement 10 kann mit entsprechender Kraft aus der Verrastung mit dem Zentrierelement 122 gelöst werden. Ein neues Filterelement 10 kann dann in das Gehäuseunterteil 112 eingesetzt werden.

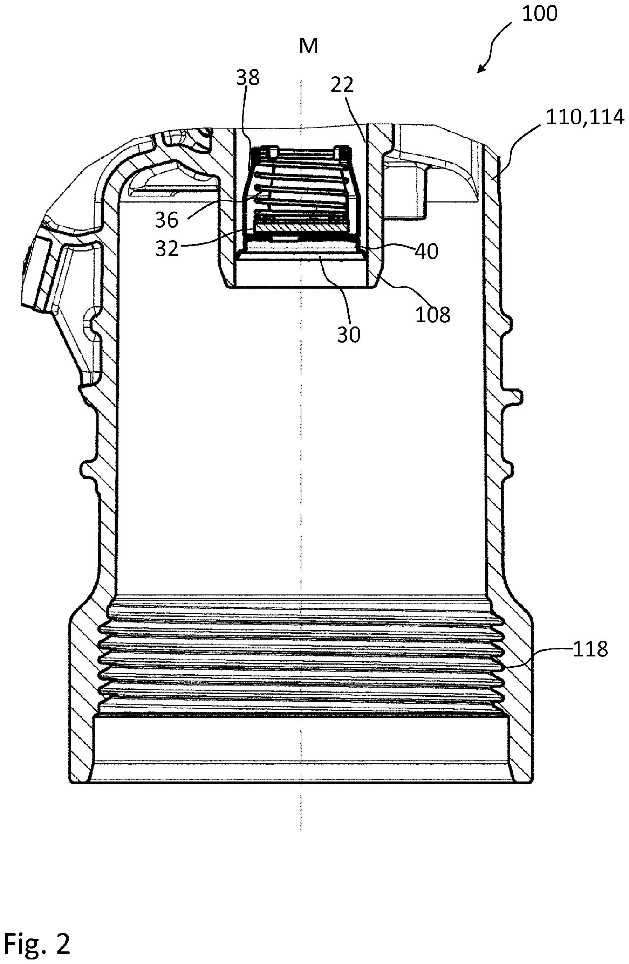

In Figur 2 ist dazu ein Längsschnitt durch das Filtergehäuseoberteil 114 des Filtersystems 100 in Figur 1 mit dem Rückschlagventil 30 in einer Ausgangsposition ohne Filterelement 10 dargestellt. Das Rückschlagventil 30 ist im Inneren des Auslassstutzens 108 angeordnet. Das Rückschlagventil 30 umfasst ein Ventilgehäuse 38 mit einem Federelement 36 und einem Verschlusselement 32. Am offenen Ende des Ventilgehäuses 38 ist ein Ventilhalter 40 angeordnet, auf dem das Verschlusselement 32 im aus dem Gehäuseoberteil 114 ausgebauten Zustand des Filterelements 10 als Ausgangsposition aufliegt. Das Verschlusselement 32 wird dazu von dem Federelement 36, das am Ventilgehäuse 38 abgestützt ist, gegen den Ventilhalter 40 gedrückt. Das Ventilgehäuse 38 ist mit dem Ventilhalter 40 verbunden. Da der Ventilhalter 40 mit dem Auslassstutzen 108 verbunden ist, stützt sich das Federelement 36 insgesamt am Gehäuseoberteil 114 ab.

Das Gehäuseoberteil 114 weist ein Schraubgewinde 118 zum Verschließen des Filtergehäuses 110 mit dem Gehäuseunterteil 112 auf.

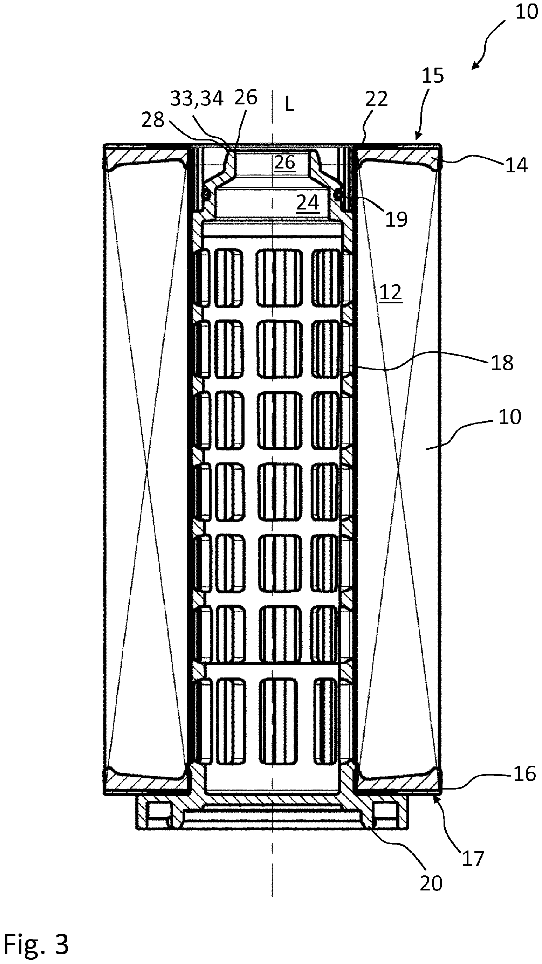

Figur 3 zeigt einen Längsschnitt durch das Filterelement 10 des Filtersystems 100 in Figur 1. Das Filterelement 10 umfasst einen um eine Längsachse L angeordneten Filterbalg 12. Der Filterbalg 12 wird an seinen beiden Stirnseiten 15, 17 von Endscheiben 14, 16 dicht abgeschlossen. Die Endscheibe 14 weist eine Öffnung 22 zur Aufnahme eines Mittelrohrs 18 im Inneren 24 des Filterelements 10 als Versteifung des Filterbalgs 12 gegen den hydraulischen Druck des Fluids auf. Das Mittelrohr 18 ist an der unteren Stirnseite 17 mit einem Abschlusselement 20 dicht abgeschlossen. Mit diesem Abschlusselement 20 kann das Filterelement 10 über ein Zentrierelement 122 mit dem Gehäuseunterteil 112 verbunden werden. Das Mittelrohr 18 läuft an seinem oberen Ende, welches der Endscheibe 14 zugewandt ist, in einen Stutzen 28 mit einer Öffnung 26 aus, der zum Abführen des gefilterten Fluids aus dem Inneren 24 des Filterbalgs 12 dient. An der Außenseite des Stutzens 28 ist eine umlaufende Dichtung 19 zum Abdichten gegen den Auslassstutzen 108 bei Einsetzen des Filterelements 10 in das Gehäuseoberteil 114 angeordnet. Der Stutzen 28 dient mit seinem auslaufenden Ende, welches von dem Mittelrohr 18 wegweisend ausgebildet ist, als Betätigungselement 33 und als Ventilsitz 34 des Rückschlagventils 30.

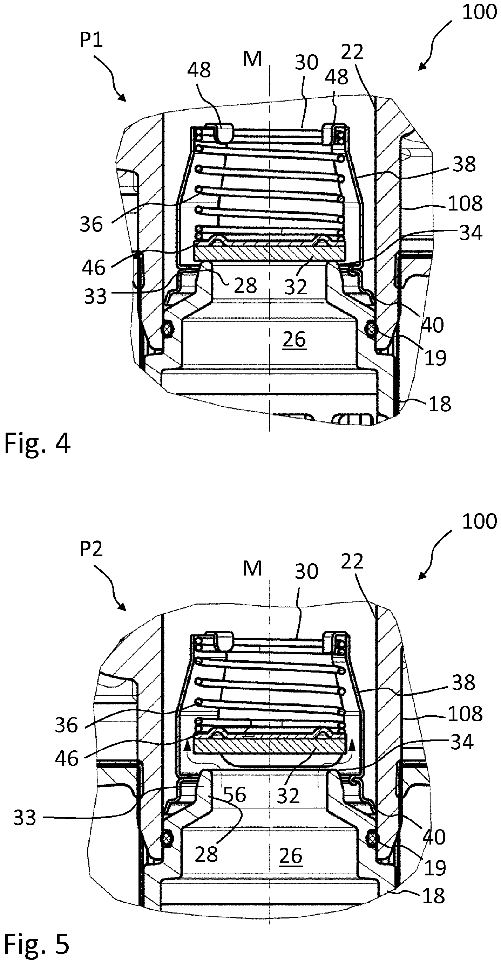

In den Figuren 4 und 5 ist in einem vergrößerten Ausschnitt eines Teils des Filtersystems 100 nach Figur 1 das Rückschlagventil 30 in einer geschlossenen Position P1 (Figur 4) sowie in einer geöffneten Position P2 (Figur 5) dargestellt. Das Rückschlagventil 30 ist im Inneren des Auslassstutzens 108 angeordnet. Das Rückschlagventil 30 umfasst das Ventilgehäuse 38 mit einem Federelement 36 und einem Verschlusselement 32. Das Verschlusselement 32, das beispielsweise als Gummiplatte ausgebildet sein kann, ist durch ein Versteifungselement 46, das zwischen Verschlusselement 32 und Federelement 36 angeordnet ist, verstärkt. Das Versteifungselement 46 kann beispielsweise als verprägtes Blechteil ausgebildet sein. Das Federelement 36 ist an einem Ende durch das Ventilgehäuse 38 mittels umgebördelter Laschen 48 gehalten und kann sich so am Ventilgehäuse 38 abstützen. Das andere Ende des Federelements 36 drückt über das Versteifungselement 46 auf das Verschlusselement 32.

Am offenen Ende des Ventilgehäuses 38 ist ein Ventilhalter 40 angeordnet, auf dem das Verschlusselement 32 im aus dem Gehäuseoberteil 114 ausgebauten Zustand des Filterelements 10 als Ausgangsposition aufliegt. Das Ventilgehäuse 38 ist mit dem Ventilhalter 40 verbunden. Da der Ventilhalter 40 mit dem Gehäuseoberteil 114 verbunden, insbesondere verkrallt, ist, kann sich das Federelement 36 insgesamt am Gehäuseoberteil 114 abstützen.

Das Filterelement 10 ist in das Gehäuseoberteil 114 mit dem Gehäuseunterteil 112, welches in dem gezeigten Ausschnitt nicht dargestellt ist, eingeschoben, sodass der Stutzen 28 des Mittelrohrs 18 des Filterelements 10 in den Auslassstutzen 108 des Gehäuseoberteils 114 greift. Der Stutzen 28 des Mittelrohrs 18 ragt dazu durch den Ventilhalter 40 hindurch. Der Stutzen 8 ist gegen den Auslassstutzen 108 mittels der umlaufenden Dichtung 19 abgedichtet. Der Stutzen 28 drückt als Betätigungselement 33 mit dem Ventilsitz 34 gegen das Verschlusselement 32 des Rückschlagventils 30. Dabei ist das Rückschlagventil 30 so lange geschlossen, bis ein ausreichender Fluiddruck das Verschlusselement 32 von seinem Ventilsitz 34 am Stutzen 28 anhebt.

In Figur 4 ist das Rückschlagventil 30 in der geschlossenen Position P1 dargestellt, bei dem das Verschlusselement 32 dichtend auf dem Ventilsitz 34 aufliegt. Im eingebauten Zustand ragt der Stutzen 28 des Filterelements 10 in den Ventilhalter 40 und über diesen hinaus. Dadurch kann der Stutzen 28 dicht am Verschlusselement 32 anliegen. Die Dichtung 19 verhindert eine Leckage des Fluids bei eingebautem Filterelement 10.

In Figur 5 ist das Rückschlagventil 30 in der geöffneten Position P2 dargestellt. In der geöffneten Position P2 hebt das Verschlusselement 32 von dem Ventilsitz 34 ab, weil das Federelement 36, welches als weiche Feder ausgebildet sein kann, durch den hydraulischen Druck des gefilterten Fluids überdrückt wird. Das gefilterte Fluid kann so um das Verschlusselement 32 herum in den Auslassstutzen 108 und dadurch aus dem Filtersystem 100 abfließen.

Figur 6 zeigt eine Draufsicht auf den Ventilhalter 40. Der Ventilhalter 40 kann beispielsweise als gekröpftes Blechbiegeteil ausgebildet sein, welches in dem Auslassstutzen 108 radial verspannbar ist. Der Ventilhalter 40 ist in dem dargestellten Ausführungsbeispiel ringförmig ausgebildet. Der Ventilhalter 40 kann so in den Auslassstutzen 108 des Gehäuseoberteils 114 eingeschoben werden und verzahnt sich dann mit dem gekröpften Rand 41, der in Figur 7 in dem Längsschnitt durch das Rückschlagventil 30 zu erkennen ist, mit der Innenseite des Auslassstutzens 108. Dadurch kann der Ventilhalter 40 in dem Auslassstutzen 108 fest fixiert werden.

Mehrere Stege 44 ragen von dem Außenrand 41 radial nach innen. Auf diesen Stegen 44 liegt das Verschlusselement 32 in der Ausgangsposition auf, wenn das Filterelement 10 nicht in dem Gehäuseoberteil 114 angeordnet ist. Das Verschlusselement 32 wird von dem Federelement 38 gegen diese Stege 44 gedrückt. Zwischen den Stegen 44 sind jeweils Leckageöffnungen 42 ausgebildet. Diese Leckageöffnungen 42 sind so zwischen Verschlusselement 32 und Ventilhalter 40 ausgebildet, damit dadurch das Fluid aus dem Auslassstutzen 108 wieder ausfließen kann, wenn das Filterelement 10 entfernt wird und so das Verschlusselement 32 nicht mehr auf dem Ventilsitz 34 des Filterelements 10 dichtend aufliegt. Hierzu ist zweckmäßigerweise der Durchmesser des Stutzens 28 so gewählt, dass die Leckageöffnungen 42 sich außerhalb des Durchmessers des Stutzens 28 befinden. Hierdurch ist im eingebauten Zustand bei niedrigem Fluiddruck das Rückschlagventil 30 geschlossen und nur bei ausreichendem Fluiddruck geöffnet. Bei ausgebautem Filterelement 10 ist das Rückschlagventil 30 wegen der Leckageöffnungen 42 leckagebehaftet ausgebildet, und der Ölkreislauf einer Brennkraftmaschine kann von der Reinseite her entleert werden.

In Figur 7 ist ein Längsschnitt durch das Rückschlagventil 30 in einer Ausgangsposition dargestellt. Das Rückschlagventil 30 umfasst das Ventilgehäuse 38 mit einem Federelement 36 und einem Verschlusselement 32. Das Verschlusselement 32, das beispielsweise als Gummiplatte ausgebildet sein kann, ist durch ein Versteifungselement 46, das zwischen Verschlusselement 32 und Federelement 36 angeordnet ist, verstärkt. Das Versteifungselement 46 kann beispielsweise als verprägtes Blechteil ausgebildet sein.

Das Federelement 36 ist an einem Ende durch das Ventilgehäuse 38 mittels umgebördelter Laschen 48 gehalten und kann sich so am Ventilgehäuse 38 abstützen. Das andere Ende des Federelements 36 drückt über das Versteifungselement 46 auf das Verschlusselement 32.

Am offenen Ende des Ventilgehäuses 38 ist ein Ventilhalter 40 angeordnet, auf dem das Verschlusselement 32 im aus dem Gehäuseoberteil 114 ausgebauten Zustand des Filterelements 10 als Ausgangsposition aufliegt. Das Ventilgehäuse 38 ist mit dem Ventilhalter 40 verbunden. Ventilgehäuse 38 und Ventilhalter 40 können beispielsweise miteinander verrastet oder verschweißt ausgebildet sein. Insbesondere können Ventilgehäuse 38 und Ventilhalter 40 auch einteilig ausgebildet sein.

Da der Ventilhalter 40 mit dem Gehäuseoberteil 114 verbunden, insbesondere verkrallt, ist, kann sich das Federelement 36 insgesamt am Gehäuseoberteil 114 abstützen.

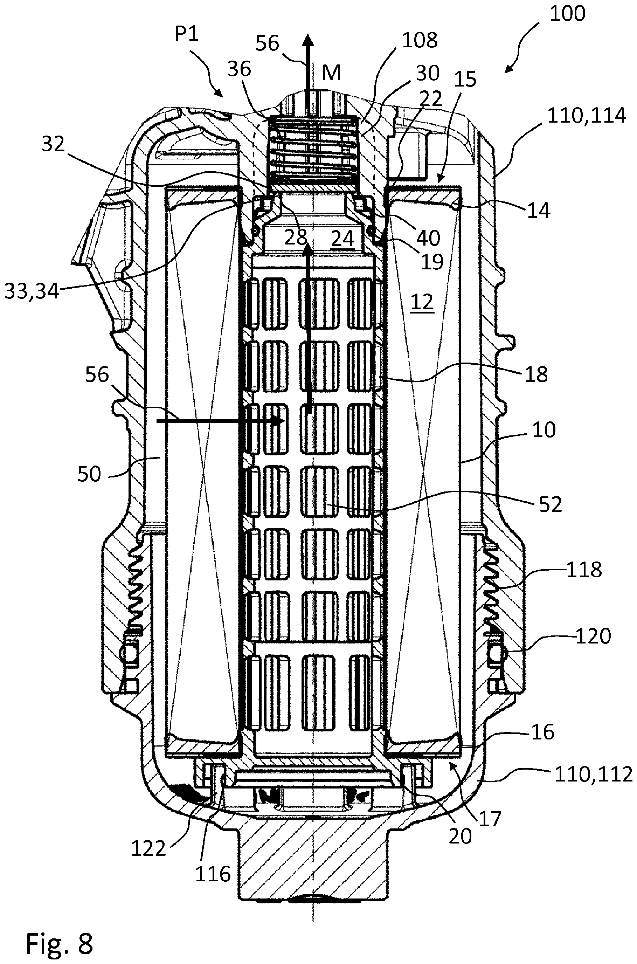

Figur 8 zeigt einen Längsschnitt durch ein Filtersystem 100 nach einem weiteren Ausführungsbeispiel der Erfindung mit einem Rückschlagventil 30 in einer geschlossenen Position P1. Zur Vermeidung unnötiger Wiederholungen wird nur auf die Unterschiede zu dem in Figur 1 dargestellten Ausführungsbeispiel eingegangen.

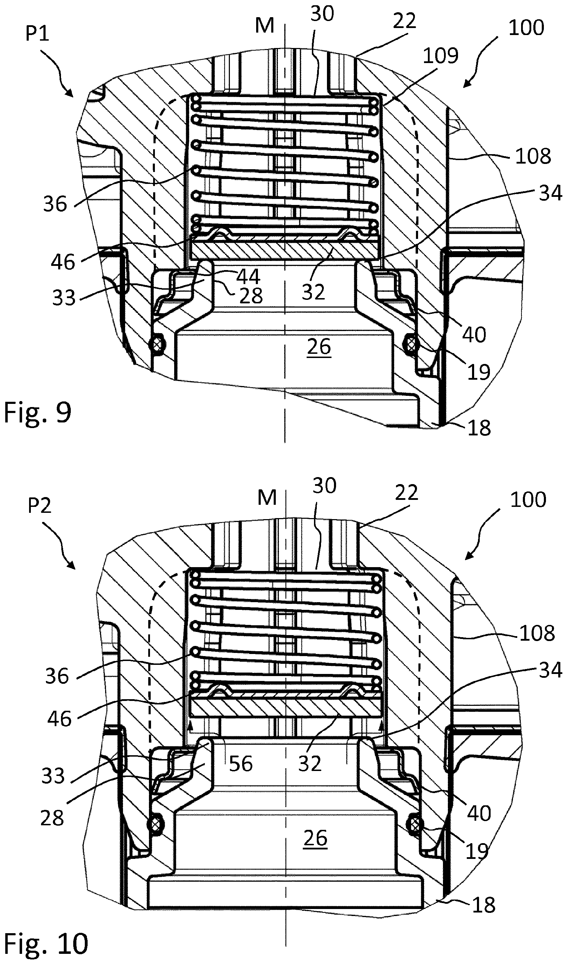

Das Rückschlagventil 30 ist bei dem in Figur 8 gezeigten Ausführungsbeispiel ohne eigenes Ventilgehäuse im Inneren des Auslassstutzens 108 angeordnet. Deutlich ist das in den beiden vergrößerten Ausschnitten in den Figuren 9 und 10 zu erkennen. Das Rückschlagventil 30 ist so nicht als vormontierbare Einheit ausgebildet, sondern wird mit den einzelnen Bauteilen in den Auslassstutzen 108 eingesetzt. Das Federelement 36 ist direkt in einem Absatz 109 des Auslassstutzens 108 angeordnet und stützt sich an radial nach innen in Richtung des Federelementes erstreckenden Rippen an diesem Absatz 109 und damit am Gehäuseoberteil 114 ab. Das Fluid strömt zwischen den Rippen außen an dem Federelement vorbei. Ein Ventilhalter 40 ist in ähnlicher Weise wie bei dem in Figur 1 gezeigten Ausführungsbeispiel im Auslassstutzen 108 angeordnet. Dadurch kann auch das Verschlusselement 32 in der Ausgangsposition ohne Filterelement 10 in ähnlicher Weise wie zuvor auf diesem Ventilhalter 40 aufliegen. Wird das Filterelement 10 in das Gehäuseoberteil 114 eingeschoben, wird durch den Stutzen 28 als Betätigungselement 33 das Verschlusselement 32 von dem Ventilhalter 40 abgehoben. Damit ist das Rückschlagventil 30 in der geschlossenen Position P1.

In Figur 9 ist in dem vergrößerten Ausschnitt des Filtersystems 100 nach Figur 8 das Rückschlagventil 30 in der geschlossenen Position P1 dargestellt. Deutlich ist zu erkennen, dass das Federelement 36 in dem Absatz 109 des Auslassstutzens 108 angeordnet ist und sich an dem Absatz 109 abstützt. Der Ventilhalter 40 ist am Anfang des Absatzes 109 des Auslassstutzens angeordnet, wobei die Stege 44 in die freie Öffnung des Absatzes 109 hineinragen, sodass das Verschlusselement 32 darauf aufliegen kann, wenn das Filterelement 10 entfernt ist. Zwischen den Stegen 44 sind (nicht sichtbare) Leckageöffnungen 42 (wie in Figur 6 zu erkennen) ausgebildet, sodass Fluid vom Auslassstutzen 108 an dem Verschlusselement 32 vorbei ausfließen kann und so der Fluidkreislauf bei entferntem Filterelement 10 entleert werden kann.

In Figur 10 ist in dem vergrößerten Ausschnitt des Filtersystems 100 das Rückschlagventil 30 in der geöffneten Position P2 dargestellt. In der geöffneten Position P2 hebt das Verschlusselement 32 von dem Ventilsitz 34 ab, weil das Federelement 36, welches als weiche Feder ausgebildet sein kann, durch den hydraulischen Druck des gefilterten Fluids überdrückt wird. Das gefilterte Fluid kann so um das Verschlusselement 32 herum in den Auslassstutzen 108 und so aus dem Filtersystem 100 abfließen.

## Patentansprüche

1. Filtersystem (100) zum Filtern eines Fluids, umfassend
- ein Filtergehäuse (110) mit einem Gehäuseoberteil (114) und einem Gehäuseunterteil (112), die sich entlang einer Gehäuseachse (M) erstrecken,
- einen am Gehäuseoberteil (114) angeordneten Auslassstutzen (108) zur Ableitung des gefilterten Fluids,
- ein Rückschlagventil (30), welches im Inneren des Auslassstutzens (108) angeordnet ist,
- ein Filterelement (10), das eine Rohfluidseite (50) von einer Reinfluidseite (52) trennt, wobei das Filterelement (10) einen Ventilsitz (34) für das Rückschlagventil (30) aufweist,
wobei das Rückschlagventil (30) in einer geschlossenen Position (P1) einen Fluidpfad (56) durch den Auslassstutzen (108) verschließt und in einer geöffneten Position (P2) den Fluidpfad (56) durch den Auslassstutzen (108) freigibt, wobei das Filterelement (10) einen um seine Längsachse (L) angeordneten Filterbalg (12) umfasst, wobei das Filterelement (10) einen Stutzen (28) mit einer Öffnung (26) in einer Längsachse (L) des Filterelements (10) zum Abführen des gefilterten Fluids aus dem Inneren (24) des Filterbalgs (12) aufweist, wobei der Stutzen (28) als Ventilsitz (34) ausgebildet ist, wobei der Stutzen (28) als Betätigungselement (33) vorgesehen ist, wobei im Inneren des Auslassstutzens (108) ein Ventilhalter (40) angeordnet ist, auf dem das Verschlusselement (32) im ausgebauten Zustand des Filterelements (10) aufliegt, insbesondere wobei im eingebauten Zustand des Filterelements (10) der Stutzen (28) des Filterelements (10) durch den Ventilhalter (40) hindurchragt.

2. Filtersystem nach Anspruch 1, wobei das Rückschlagventil (30) ein Verschlusselement (32) und ein Federelement (36) aufweist, wobei das Federelement (30) am Gehäuseoberteil (114) abgestützt ist, insbesondere wobei das Federelement (30) zwischen Verschlusselement (32) und Gehäuseoberteil (114) eingespannt ist.

3. Filtersystem nach einem der vorhergehenden Ansprüche, wobei der Filterbalg (12) wenigstens eine erste Endscheibe (14) an einer ersten Stirnseite (15) aufweist, welche Endscheibe (14) eine Öffnung (22) zur Aufnahme eines Mittelrohrs (18) im Inneren (24) des Filterbalgs (12) aufweist, wobei der Stutzen (28) mit dem Ventilsitz (34) an einem der Endscheibe (14) zugewandten Ende des Mittelrohrs (18) ausgebildet ist.

4. Filtersystem nach einem der vorhergehenden Ansprüche, wobei das Rückschlagventil (30) im ausgebauten Zustand des Filterelements (10) leckagebehaftet ausgebildet ist.

5. Filtersystem nach einem der vorherigen Ansprüche, wobei zwischen Verschlusselement (32) und Ventilhalter (40) Leckageöffnungen (42) ausgebildet sind, insbesondere wobei der Ventilhalter (40) radial nach innen ragende Stege (44) aufweist, auf welchen das Verschlusselement (32) im ausgebauten Zustand des Filterelements (10) aufliegt.

6. Filtersystem nach einem der vorherigen Ansprüche, wobei der Ventilhalter (40) als Blechbiegeteil ausgebildet ist, welches in dem Auslassstutzen (108) radial verspannbar ist.

7. Filtersystem nach einem der vorhergehenden Ansprüche, wobei das Rückschlagventil (30) ein Ventilgehäuse (38) aufweist, welches im Inneren des Auslassstutzens (108) und/oder an dem Ventilhalter (40) angeordnet ist und an welchem das Federelement (36) abgestützt ist.

8. Filtersystem nach einem der vorherigen Ansprüche, wobei das Ventilgehäuse (38) und der Ventilhalter (40) miteinander verbindbar, insbesondere einteilig ausgebildet sind.

9. Filtersystem nach einem der vorhergehenden Ansprüche, wobei das Filterelement (10) mit seinem Mittelrohr (18) wenigstens teilweise in den Auslassstutzen (108) einschiebbar ausgebildet ist, wobei der Auslassstutzen (108) gegen die Öffnung (22) der Endscheibe (14) und/oder gegen das Mittelrohr (18) abdichtbar ausgebildet ist, insbesondere wobei der Stutzen (28) des Mittelrohrs (18) an seiner Außenseite gegen den Auslassstutzen (108) abgedichtet ist.

10. Filtersystem nach einem der vorhergehenden Ansprüche, wobei das Mittelrohr (18) am der zentralen Öffnung (26) gegenüber liegenden Ende ein Abschlusselement (20) aufweist, welches mit dem Gehäuseunterteil (112) verbindbar ausgebildet ist.

11. Verwendung eines Rückschlagventils (30) in einem Filtersystem (100) nach einem der Ansprüche 1 bis 10 mit einem Filterelement (10), welches bei bestimmungsgemäßer Montage in dem Filtersystem (100) im Inneren eines Auslassstutzens (108) des Filtersystems (100) angeordnet ist, mit einem durch ein Federelement (36) gegen einen Ventilsitz (34) abgestützten Verschlusselement (32), wobei der Ventilsitz (34) an oder in dem Filterelement (10) ausgebildet ist.

12. Filterelement (10) zur Verwendung in einem Filtersystem (100) nach einem der Ansprüche 1 bis 10, mit einer Längsachse (L), umfassend einen um die Längsachse (L) angeordneten Filterbalg (12), wobei das Filterelement (10) einen Stutzen (28) mit einer Öffnung (26) zum Abführen des gefilterten Fluids aus dem Inneren (24) des Filterbalgs (12) aufweist, wobei der Stutzen (28) als Ventilsitz (34) eines Rückschlagventils (30) ausgebildet ist, wobei der Stutzen (28) als Betätigungselement (33) vorgesehen ist, , insbesondere wobei im eingebauten Zustand des Filterelements (10) der Stutzen (28) des Filterelements (10) durch den Ventilhalter (40) hindurchragt, wobei das Filterelement (10) ein Mittelrohr (18) im Inneren (24) des Filterbalgs (12) aufweist, wobei das Filterelement (10) mit seinem Mittelrohr (18) wenigstens teilweise in einen an einem Gehäuseoberteil (114) eines Filtersystems (100) angeordneten Auslassstutzen (108) einschiebbar ausgebildet ist, wobei der Stutzen (28) des Mittelrohrs (18) an seiner Außenseite gegen den Auslassstutzen (108) abdichtbar ist, wobei das Mittelrohr (18) an einem der zentralen Öffnung (26) gegenüberliegenden Ende ein Abschlusselement (20) aufweist, welches mit einem Gehäuseunterteil (112) eines Filtersystems (100) verbindbar ausgebildet ist.

## Claims

1. Filter system (100) for filtering a fluid, comprising
- a filter housing (110) having a housing upper part (114) and a housing lower part (112) which extend along a housing axis (M),
- an outlet port (108) disposed at the housing upper part (114) for discharging the filtered fluid,
- a non-return valve (30) disposed inside the outlet port (108),
- a filter element (10) separating a raw fluid side (50) from a clean fluid side (52), wherein the filter element (10) features a valve seat (34) for the non-return valve (30),
wherein the non-return valve (30), in a closed position (P1), closes a fluid path (56) through the outlet port (108) and, in an open position (P2), opens the fluid path (56) through the outlet port (108), wherein the filter element (10) comprises a filter bellows (12) disposed around its longitudinal axis (L), wherein the filter element (10) features a pipe connection (28) having an opening (26) in a longitudinal axis (L) of the filter element (10) for evacuating the filtered fluid from the interior (24) of the filter bellows (12), wherein the pipe connection (28) is designed as valve seat (34), wherein the pipe connection (28) is provided as actuation member (33), wherein a valve holder (40) is disposed inside the outlet port (108), the closure member (32) resting in the removed state of the filter element (10) on said valve holder, in particular wherein, in the installed state of the filter element (10), the pipe connection (28) of the filter element (10) projects through the valve holder (40).

2. Filter system according to claim 1, wherein the non-return valve (30) features a closure member (32) and a spring element (36), wherein the spring element (30) rests on the housing upper part (114), in particular wherein the spring element (30) is clamped between the closure member (32) and the housing upper part (114).

3. Filter system according to one of the preceding claims, wherein the filter bellows (12) features at least a first end disc (14) at a first front face (15), said end disc (14) featuring an opening (22) for accommodating a central tube (18) inside (24) the filter bellows (12), wherein the pipe connection (28) is designed with the valve seat (34) at an end of the central tube (18) facing the end disc (14).

4. Filter system according to one of the preceding claims, wherein the non-return valve (30) is designed to leak when the filter element (10) is in the removed state.

5. Filter system according to one of the preceding claims, wherein leakage openings (42) are provided between the closure member (32) and the valve holder (40), in particular wherein the valve holder (40) features radially inwardly projecting webs (44) on which the closure member (32) rests in the removed state of the filter element (10).

6. Filter system according to one of the preceding claims, wherein the valve holder (40) is designed as a bent sheet metal part which is radially tensionable in the outlet port (108).

7. Filter system according to one of the preceding claims, wherein the non-return valve (30) features a valve housing (38) which is disposed inside the outlet port (108) and/or on which the valve holder (40) is disposed and on which the spring element (36) is supported.

8. Filter system according to one of the preceding claims, wherein the valve housing (38) and the valve holder (40) are connectable to each other, in particular are designed in one piece.

9. Filter system according to one of the preceding claims, wherein the filter element (10), with its central tube (18), is designed at least partially to be insertable into the outlet port (108), wherein the outlet port (108) is designed to be sealable against the opening (22) of the end disc (14) and/or against the central tube (18), in particular wherein the pipe connection (28) of the central tube (18) is sealed on its exterior side against the outlet port (108).

10. Filter system according to one of the preceding claims, wherein the central tube (18) features an end element (20) at the end opposite the central opening (26), said end element being designed to be connectable with the housing lower part (112).

11. Use of a non-return valve (30) in a filter system (100) according to one of the claims 1 to 10 with a filter element (10), which is disposed during correct assembly in the filter system (100) inside an outlet port (108) of the filter system (100), with a closure member (32) supported by a spring element (36) against a valve seat (34), wherein the valve seat (34) is designed on or in the filter element (10).

12. Filter element (10) for being used in a filter system (100) according to one of the claims 1 to 10, having a longitudinal axis (L), comprising a filter bellows (12) disposed around the longitudinal axis (L), wherein the filter element (10) features a pipe connection (28) having an opening (26) for evacuating the filtered fluid from the interior (24) of the filter bellows (12), wherein the pipe connection (28) is designed as valve seat (34) of a non-return valve (30), wherein the pipe connection (28) is provided as actuation member (33), in particular wherein, in the installed state of the filter element (10), the pipe connection (28) of the filter element (10) projects through the valve holder (40), wherein the filter element (10) features a central tube (18) in the interior (24) of the filter bellows (12), wherein the filter element (10) with its central tube (18) is designed at least partially insertable into an outlet port (108) disposed on a housing upper part (114) of a filter system (100), wherein the pipe connection (28) of the central tube (18) is sealable at its exterior side against the outlet port (108), wherein the central tube (18) features, at an end opposite the central opening (26), an end element (20) designed to be connectable to a housing lower part (112) of a filter system (100).

## Revendications

1. Système de filtre (100) destiné à filtrer un fluide, comprenant
- un boîtier de filtre (110) ayant une partie supérieure de boîtier (114) et une partie inférieure de boîtier (112) qui s'étendent le long d'un axe de boîtier (M),
- une tubulure d'évacuation (108) disposée sur la partie supérieure de boîtier (114) pour évacuer le fluide filtré,
- un clapet antiretour (30) disposé à l'intérieur de la tubulure d'évacuation (108),
- un élément filtrant (10) séparant un côté de fluide brut (50) d'un côté de fluide pur (52), l'élément filtrant (10) présentant un siège de soupape (34) pour le clapet antiretour (30),
le clapet antiretour (30) obturant, en position fermée (P1), une trajectoire de fluide (56) à travers la tubulure d'évacuation (108) et libérant, en position ouverte (P2), la trajectoire de fluide (56) à travers la tubulure d'évacuation (108), l'élément filtrant (10) comprenant un soufflet de filtre (12) disposé autour de son axe longitudinal (L), l'élément filtrant (10) présentant une tubulure (28) ayant une ouverture (26) dans un axe longitudinal (L) de l'élément filtrant (10) pour évacuer le fluide filtré de l'intérieur (24) du soufflet de filtre (12), la tubulure (28) étant conçue en tant que siège de soupape (34), la tubulure (28) étant prévue en tant qu'élément d'actionnement (33), un porte-soupape (40), sur lequel repose l'élément de fermeture (32) en état démonté de l'élément filtrant (10), étant disposé à l'intérieur de la tubulure d'évacuation (108), notamment la tubulure (28) de l'élément filtrant (10) traversant le porte-soupape (40) à l'état monté de l'élément filtrant (10).

2. Système de filtre selon la revendication 1, le clapet antiretour (30) présentant un élément de fermeture (32) et un élément de ressort (36), l'élément de ressort (30) reposant sur la partie supérieure de boîtier (114), notamment l'élément de ressort (30) étant serré entre l'élément de fermeture (32) et la partie supérieure de boîtier (114).

3. Système de filtre selon l'une quelconque des revendications précédentes, le soufflet de filtre (12) présentant au moins un premier disque d'extrémité (14) sur une première face frontale (15), lequel disque d'extrémité (14) présente une ouverture (22) pour accommoder un tube central (18) à l'intérieur (24) du soufflet de filtre (12), la tubulure (28) avec le siège de soupape (34) étant réalisée sur une extrémité du tube central (18) orientée vers le disque d'extrémité (14).

4. Système de filtre selon l'une quelconque des revendications précédentes, le clapet antiretour (30) étant conçu pour accepter des fuites en état démonté de l'élément filtrant (10).

5. Système de filtre selon l'une quelconque des revendications précédentes, des ouvertures de fuite (42) étant conçues entre l'élément de fermeture (32) et le porte-soupape (40), notamment le porte-soupape (40) présentant des entretoises (44) faisant saillie radialement vers l'intérieur, sur lesquelles repose l'élément de fermeture (32) en état démonté de l'élément filtrant (10).

6. Système de filtre selon l'une quelconque des revendications précédentes, le porte-soupape (40) étant conçu en tant que pièce de tôle pliée qui peut être serré radialement dans la tubulure d'évacuation (108).

7. Système de filtre selon l'une quelconque des revendications précédentes, le clapet antiretour (30) présentant une cage de soupape (38) qui est disposée à l'intérieur de la tubulure d'évacuation (108) et/ou sur le porte-soupape (40) et sur lequel repose l'élément de ressort (36).

8. Système de filtre selon l'une quelconque des revendications précédentes, la cage de soupape (38) et le porte-soupape (40) pouvant être reliés l'un à l'autre, notamment sont réalisés d'un seul tenant.

9. Système de filtre selon l'une quelconque des revendications précédentes, l'élément filtrant (10) avec son tube central (18) étant conçu pour pouvoir être inséré au moins partiellement dans la tubulure d'évacuation (108), la tubulure d'évacuation (108) étant conçue pour pouvoir être rendue étanche par rapport à l'ouverture (22) du disque d'extrémité (14) et/ou par rapport au tube central (18), notamment la tubulure (28) du tube central (18) étant rendue étanche sur son côté extérieur par rapport à la tubulure d'évacuation (108).

10. Système de filtre selon l'une quelconque des revendications précédentes, le tube central (18) présentant, à l'extrémité opposée à l'ouverture centrale (26), un élément de fermeture (20) conçu pour pouvoir être relié à la partie inférieure de boîtier (112).

11. Utilisation d'un clapet antiretour (30) dans un système de filtre (100) selon l'une quelconque des revendications 1 à 10, avec un élément filtrant (10) qui, lorsqu'il est monté conformément à son utilisation dans le système de filtre (100), est disposé à l'intérieur d'une tubulure d'évacuation(108) du système de filtre (100), avec un élément de fermeture (32) supporté par un élément de ressort (36) contre un siège de soupape (34), le siège de soupape (34) étant conçu sur ou dans l'élément filtrant (10).

12. Élément filtrant (10) pour être utilisé dans un système de filtre (100) selon l'une quelconque des revendications 1 à 10, avec un axe longitudinal (L), comprenant un soufflet de filtre (12) disposé autour de l'axe longitudinal (L), l'élément filtrant (10) présentant une tubulure (28) ayant une ouverture (26) pour évacuer le fluide filtré de l'intérieur (24) du soufflet de filtre (12), la tubulure (28) étant conçue en tant que siège de soupape (34) d'un clapet antiretour (30), la tubulure (28) étant prévue en tant qu'élément d'actionnement (33), notamment la tubulure (28) de l'élément filtrant (10) traversant le porte-soupape (40) à l'état monté de l'élément filtrant (10), l'élément filtrant (10) présentant un tube central (18) à l'intérieur (24) du soufflet de filtre (12), l'élément filtrant (10) étant réalisé avec son tube central (18) de manière à pouvoir être inséré au moins partiellement dans une tubulure d'évacuation (108) disposée sur une partie supérieure de boîtier (114) d'un système de filtre (100), la tubulure (28) du tube central (18) pouvant être rendue étanche sur son côté extérieur contre la tubulure d'évacuation (108), le tube central (18) présentant, à une extrémité opposée à l'ouverture centrale (26), un élément de fermeture (20) conçu pour pouvoir être relié à la partie inférieure de boîtier (112) d'un système de filtre (100).
